# EUROPÄISCHE PATENTANMELDUNG

(11) **EP 4 631 829 A1**
(43) Veröffentlichungstag der Anmeldung: **15.10.2025**
(21) Anmeldenummer: 24169068.4
(22) Anmeldetag: 08.04.2024
(51) Int. Cl.: B62D 21/11, B62D 27/02

(54) **ANBINDUNGSADAPTER ZUR BEFESTIGUNG EINES FAHRWERKBAUTEILS**

(71) Anmelder: Benteler Automobiltechnik GmbH, 33102 Paderborn (DE)
(72) Erfinder: SCHWEGMANN, Christoph, 32694 Dörentrup (DE); HOFFMANN, Dietmar, 33100 Paderborn (DE); STASTNY, Peter Michael, 33129 Delbrück (DE)
(74) Vertreter: Patentship Patentanwaltsgesellschaft mbH

(57) **Zusammenfassung**

Die Offenbarung betrifft einen Anbindungsadapter (100, 100-1, 100-2) zur Befestigung eines Fahrwerkbauteils (218, 219, 219-1, 219-2, 221, 221-1, 221-2) an einem Fahrzeugbauteil (237), wobei der Anbindungsadapter (100, 100-1, 100-2) als eine hohlzylinderförmige Hülse (101) geformt ist, welche eine Zylinderdeckfläche (103) und eine Zylindermantelfläche (105) aufweist, wobei die Zylinderdeckfläche (103) und die Zylindermantelfläche (105) einen Hülseninnenraum (107) der hohlzylinderförmigen Hülse (101) begrenzen, wobei die Zylindermantelfläche (105) an dem Fahrwerkbauteil (218, 219, 219-1, 219-2, 221, 221-1, 221-2) stoffschlüssig und/oder kraftschlüssig und/oder formschlüssig befestigbar ist, wobei in der Zylinderdeckfläche (103) eine Befestigungsöffnung (109) geformt ist, durch welche ein Befestigungsmittel (241) führbar ist, um den Anbindungsadapter (100, 100-1, 100-2) an dem Fahrzeugbauteil (237) zu befestigen, und wobei die hohlzylinderförmige Hülse (101) als ein aus Stahl bestehendes einteiliges und materialeinheitliches Tiefziehbauteil geformt ist.

## Beschreibung

Die vorliegende Offenbarung betrifft einen Anbindungsadapter zur Befestigung eines Fahrwerkbauteils, insbesondere einen Anbindungsadapter zur Befestigung eines Fahrwerkbauteils an einem Fahrzeugbauteil, eine Fahrwerkanordnung in einem Fahrzeug umfassend ein Fahrwerkbauteil und einen Anbindungsadapter, sowie ein Verfahren zur Herstellung eines Anbindungsadapters.

In Fahrzeugen werden Fahrwerkbauteile, wie beispielsweise Achsträger verbaut, um eine stabile Verbindung zwischen Fahrzeugbauteilen, wie beispielsweise der Fahrzeugkarosserie und dem Fahrwerk zu erreichen. Hierbei wird eine hohe strukturelle Stabilität des Anbindungsadapters zur Bereitstellung der strukturellen Verbindung zwischen einem Fahrwerkbauteil und dem Fahrzeugbauteil benötigt, so dass ein Bedarf besteht Anbindungsadapter bereitzustellen, welche neben einer entsprechend hohen strukturellen Stabilität auch noch einfach und kostengünstig hergestellt werden können.

Herkömmliche im Kaltpressverfahren hergestellte Anbindungsadapter weisen im Bereich der Anbindung an die Fahrzeugkarosserie unnötig hohe Wandstärken auf, was sich negativ auf das Bauteilgewicht und die Materialkosten auswirkt.

In der DE 10 2021 003 727 A1 ist ein Hilfsrahmen mit Aufnahmebuchsen zur Anordnung in einem Rohbau eines Kraftwagens offenbart, wobei jeweils ein Substitut in der jeweiligen Aufnahmebuchse aufgenommen ist.

Es ist die Aufgabe der vorliegenden Offenbarung, einen Anbindungsadapter zur Anbindung eines Fahrwerkbauteils an einem Fahrzeugbauteil bereitzustellen, wobei der Anbindungsadapter kostengünstig herstellbar ist und eine hohe strukturelle Stabilität aufweist.

Diese Aufgabe wird durch die Merkmale der unabhängigen Ansprüche gelöst. Vorteilhafte Ausführungsformen der Offenbarung sind Gegenstand der abhängigen Ansprüche, der Beschreibung sowie der beiliegenden Figuren.

Die vorliegende Offenbarung basiert auf der Erkenntnis, dass die obige Aufgabe durch einen aus Stahl bestehenden und als einteiliges und materialeinheitliches Tiefziehbauteil ausgebildeten Anbindungsadapter gelöst werden kann, um die erforderliche strukturelle Stabilität des tiefgezogenen Anbindungsadapters zu gewährleisten.

Gemäß einem ersten Aspekt betrifft die Offenbarung einen Anbindungsadapter zur Befestigung eines Fahrwerkbauteils an einem Fahrzeugbauteil, wobei der Anbindungsadapter als eine hohlzylinderförmige Hülse geformt ist, welche eine Zylinderdeckfläche und eine Zylindermantelfläche aufweist, wobei die Zylinderdeckfläche und die Zylindermantelfläche einen Hülseninnenraum der hohlzylinderförmigen Hülse begrenzen, wobei die Zylindermantelfläche an dem Fahrwerkbauteil stoffschlüssig und/oder kraftschlüssig und/oder formschlüssig befestigbar ist, wobei in der Zylinderdeckfläche eine Befestigungsöffnung geformt ist, durch welche ein Befestigungsmittel führbar ist, um den Anbindungsadapter an dem Fahrzeugbauteil zu befestigen, und wobei die hohlzylinderförmige Hülse als ein aus Stahl bestehendes einteiliges und materialeinheitliches Tiefziehbauteil geformt ist.

Dadurch wird der technische Vorteil erreicht, dass die aus Stahl bestehende einteilige und materialeinheitliche tiefgezogene Hülse einfach und effektiv mittels eines Tiefziehvorgangs herstellbar ist, und hierbei die erforderliche Wandstärke aufweist, welche notwendig ist, um die erforderliche strukturelle Stabilität zur Verbindung zwischen dem Fahrwerkbauteil und dem Fahrzeugbauteil bereitzustellen.

Der entsprechende Tiefziehvorgang zur Herstellung der aus Stahl bestehenden hohlzylinderförmigen Hülse erlaubt eine einfache und kostengünstige Herstellung einer Vielzahl von Anbindungsadaptern in einer kurzen Zeit. Zudem können die identisch hergestellten Anbindungsadapter an verschiedenen Positionen unterschiedlicher Fahrwerkbauteile, wie insbesondere Achsträger, angeordnet werden, um an unterschiedlichen Positionen eine wirksame Verbindung zwischen dem Fahrwerkbauteil und dem Fahrzeugbauteil bereitzustellen. Dadurch wird der Herstellungs- und Montageaufwand reduziert, und eine deutliche Kostenreduktion kann erreicht werden.

Der als hohlzylinderförmige Hülse ausgebildete Anbindungsadapter weist eine Zylindermantelfläche auf, an welcher das Fahrwerkbauteil stoffschlüssig, insbesondere verschweißt, und/oder kraftschlüssig, insbesondere verschraubt, und/oder formschlüssig, insbesondere vercrimpt, befestigbar ist. Hierbei kann eine Schweißnaht vorhanden sein, oder können mehrere Schweißnähte vorhanden sein, welche die Zylindermantelfläche abschnittsweise oder vollständig umlaufen.

Der als hohlzylinderförmige Hülse ausgebildete Anbindungsadapter weist eine Zylinderdeckfläche mit einer Befestigungsöffnung auf, durch welche ein Befestigungsmittel, insbesondere eine Befestigungsschraube, führbar ist, um den Anbindungsadapter an dem Fahrzeugbauteil, insbesondere einem Fahrzeugboden des Fahrzeugs, zu befestigen.

Die Befestigungsöffnung kann insbesondere als eine kreisrunde, ovale oder langlochförmige Befestigungsöffnung in der Zylinderdeckfläche geformt sein. Die Befestigungsöffnung kann insbesondere mittig in der Zylinderdeckfläche, insbesondere an einem Mittelpunkt der Zylinderdeckfläche geformt sein.

Somit erlaubt die Geometrie der hohlzylinderförmigen Hülse eine gleichmäßige Krafteinleitung von dem Fahrwerkbauteil durch die Zylindermantelfläche und durch die Zylinderdeckfläche zu dem Fahrzeugbauteil, bzw. in einer entgegengesetzten Richtung.

Das Fahrwerkbauteil ist insbesondere ein Vorderachsträger, ein Hinterachsträger, oder eine Verbundlenkerachse, die insbesondere einen Längsträger und/oder Querträger umfasst.

Das Fahrzeugbauteil ist insbesondere als ein Fahrzeugkarosseriebauteil, insbesondere als ein Fahrzeugboden, ausgebildet.

In einer vorteilhaften Ausführungsform weisen die Zylinderdeckfläche und/oder die Zylindermantelfläche der hohlzylinderförmigen Hülse eine Wandstärke zwischen 1,5 mm und 5 mm auf, bevorzugt zwischen 2 mm und 4 mm.

Dadurch wird der technische Vorteil erreicht, dass die entsprechenden Wandstärken eine ausreichende strukturelle Stabilität des Anbindungsadapters sicherstellen.

Insbesondere weisen die Zylinderdeckfläche und die Zylindermantelfläche der hohlzylinderförmigen Hülse eine Wandstärke zwischen 1,5 mm und 5 mm auf, bevorzugt zwischen 2 mm und 4 mm.

In einer vorteilhaften Ausführungsform weist die hohlzylinderförmige Hülse einen die Hülse umlaufenden Übergangsbereich auf, welcher zwischen der Zylinderdeckfläche und der Zylindermantelfläche der hohlzylinderförmigen Hülse geformt ist, wobei der die Hülse umlaufende Übergangsbereich insbesondere als ein abgerundeter Rand der Zylinderdeckfläche ausgebildet ist.

Dadurch wird der technische Vorteil erreicht, dass der entsprechende umlaufende Übergangsbereich, insbesondere der abgerundete Rand der Zylinderdeckfläche, eine strukturell stabile Verbindung zwischen der Zylindermantelfläche und der Zylinderdeckfläche ermöglicht.

In einer vorteilhaften Ausführungsform weist der umlaufende Übergangsbereich, insbesondere der abgerundete Rand der Zylinderdeckfläche, eine Wandstärke zwischen 1,0 mm und 5 mm auf.

Dadurch wird der technische Vorteil erreicht, dass der entsprechende umlaufende Übergangsbereich, insbesondere der abgerundete Rand der Zylinderdeckfläche, gegenüber der Zylinderdeckfläche und/oder der Zylindermantelfläche herstellungsbedingt durch das Tiefziehverfahren eine minimal reduzierte Wandstärke aufweist, welche jedoch gemäß dem Bereich zwischen 1,0 mm und 5 mm weiterhin ausreichend ist, um eine ausreichende strukturelle Stabilität des Anbindungsadapters zu erreichen.

In einer vorteilhaften Ausführungsform weist die hohlzylinderförmige Hülse an einer der Zylinderdeckfläche gegenüberliegenden Unterseite der hohlzylinderförmigen Hülse keine Zylinderbodenfläche auf.

Dadurch wird der technische Vorteil erreicht, dass durch eine entsprechende offene Unterseite der hohlzylinderförmigen Hülse das Gewicht des Anbindungsadapters vorteilhaft reduziert werden kann, während aufgrund der Krafteinleitung über die Zylindermantelfläche die gesamte strukturelle Stabilität des Anbindungsadapters weiterhin gewährleistet wird.

In einer vorteilhaften Ausführungsform weist die hohlzylinderförmige Hülse einen Außendurchmesser zwischen 30 mm und 150 mm, bevorzugt zwischen 40 mm und 80 mm, auf, und/oder weist die hohlzylinderförmige Hülse eine Höhe zwischen 30 mm und 200 mm auf, und/oder weist die Befestigungsöffnung in der Zylinderdeckfläche einen Öffnungsdurchmesser zwischen 7 mm und 30 mm auf.

Dadurch wird der technische Vorteil erreicht, dass die entsprechenden Dimensionen der hohlzylinderförmigen Hülse ermöglichen, dass der Anbindungsadapter wirksam an der Verbindungsstelle zwischen dem Fahrwerkbauteil und dem Fahrzeugbauteil verwendet werden kann, bzw. dass der Öffnungsdurchmesser der Befestigungsöffnung ausreichend ist, um ein wirksames Durchführen des Befestigungsmittels zu gewährleisten.

In einer vorteilhaften Ausführungsform ist die Zylindermantelfläche mit dem Fahrwerkbauteil verschweißbar und/oder verschraubbar.

Dadurch wird der technische Vorteil erreicht, dass eine Verschweißung der Zylindermantelfläche des Anbindungsadapters mit dem Fahrwerkbauteil eine besonders wirksame Befestigung erreicht. Insbesondere kann die Zylindermantelfläche direkt mit einem Längsträger und/oder Querträger des Fahrwerkbauteils verschweißbar sein, oder kann die Zylindermantelfläche mit einem Adapterarm des Fahrwerkbauteils verschweißbar sein, wobei dann der Adapterarm direkt mit dem Längsträger und/oder Querträger des Fahrwerkbauteils, verschweißbar und/oder verschraubbar ist.

Gemäß einem zweiten Aspekt betrifft die Offenbarung eine Fahrwerkanordnung in einem Fahrzeug, umfassend ein Fahrwerkbauteil, und zumindest einen Anbindungsadapter nach dem ersten Aspekt, wobei die Zylindermantelfläche des zumindest einen Anbindungsadapters an dem Fahrwerkbauteil stoffschlüssig, insbesondere verschweißt, und/oder kraftschlüssig, insbesondere verschraubt, und/oder formschlüssig, insbesondere vercrimpt, befestigt ist.

Dadurch wird der technische Vorteil erreicht, dass die Geometrie des zumindest einen Anbindungsadapters innerhalb der Fahrwerkanordnung eine wirksame stoffschlüssige Befestigung zwischen dem Fahrwerkbauteil und dem zumindest einen Anbindungsadapter ermöglicht.

Insbesondere umfasst der zumindest eine Anbindungsadapter einen einzigen Anbindungsadapter oder eine Mehrzahl von Anbindungsadaptern, insbesondere zwei, drei, vier, fünf, sechs, sieben, acht, neun oder zehn Anbindungsadapter, welcher, bzw. welche an dem Fahrwerkbauteil befestigt sind.

Insbesondere ist das Fahrwerkbauteil aus einem Metall, insbesondere Aluminium und/oder Stahl, oder einem Faserverbundkunststoff gebildet.

Insbesondere weist das Fahrwerkbauteil ein Hohlprofil auf.

In einer vorteilhaften Ausführungsform ist das Fahrwerkbauteil ein Vorderachsträger, ein Hinterachsträger, oder eine Verbundlenkerachse, die insbesondere einen Längsträger und/oder einen Querträger umfasst.

Dadurch wird der technische Vorteil erreicht, dass eine wirksame Verbindung mit den genannten Fahrwerkbauteilen durch den Anbindungsadapter erreicht werden kann.

In einer vorteilhaften Ausführungsform ist der zumindest eine Anbindungsadapter an dem Fahrwerkbauteil, insbesondere Längsträger und/oder Querträger des Fahrwerkbauteils, stoffschlüssig und/oder kraftschlüssig und/oder formschlüssig befestigt, wobei der zumindest eine Anbindungsadapter insbesondere stoffschlüssig und/oder kraftschlüssig und/oder formschlüssig an einem Adapterarm des Fahrwerkbauteils befestigt ist, wobei der Adapterarm insbesondere stoffschlüssig, insbesondere verschweißt, und/oder kraftschlüssig, insbesondere verschraubt, mit dem Längsträger und/oder dem Querträger, verbunden ist.

Dadurch wird der technische Vorteil erreicht, dass je nach der Bauteilgeometrie des Fahrwerkbauteils und des Fahrzeugbauteils der zumindest eine Anbindungsadapter entweder direkt an dem Längsträger und/oder Querträger befestigt werden kann, und/oder dass der zumindest eine Anbindungsadapter durch den Adapterarm beabstandet an dem Längsträger und/oder Querträger befestigt werden kann.

Insbesondere umfasst der zumindest eine Anbindungsadapter eine Mehrzahl von Anbindungsadaptern, wobei hierbei zumindest einer der Anbindungsadapter direkt an dem Längsträger und/oder Querträger des Fahrwerkbauteils, stoffschlüssig und/oder kraftschlüssig und/oder formschlüssig befestigt ist, und wobei hierbei zumindest einer der Anbindungsadapter durch den Adapterarm des Fahrwerkbauteils beabstandet an dem Längsträger und/oder Querträger, insbesondere stoffschlüssig, insbesondere verschweißt, und/oder kraftschlüssig, insbesondere verschraubt, befestigt ist.

Insbesondere weist der Adapterarm an einem dem Anbindungsadapter zugewandten ersten Armabschnitt zwei Armflansche auf, welche an der Zylindermantelfläche der hohlzylinderförmigen Hülse des Anbindungsadapters anliegen, und mit der Zylindermantelfläche stoffschlüssig verbunden, insbesondere verschweißt, und/oder kraftschlüssig, insbesondere verschraubt, und/oder formschlüssig, insbesondere vercrimpt, befestigt sind. Insbesondere erstreckt sich der erste Armabschnitt horizontal.

Insbesondere weist der Adapterarm einen dem Anbindungsadapter, bzw. dem ersten Armabschnitt abgewandten zweiten Armabschnitt auf, wobei ein zweites Armabschnittende des zweiten Armabschnitts hierbei mit dem Längsträger und/oder Querträger stoffschlüssig verbunden, insbesondere verschweißt, und/oder kraftschlüssig, insbesondere verschraubt, ist. Insbesondere erstreckt sich der zweite Armabschnitt schräg vertikal.

Insbesondere weist der Adapterarm einen dritten gekrümmten Armabschnitt auf, welcher den ersten, insbesondere horizontalen Armabschnitt, mit dem zweiten, insbesondere schräg vertikalen, Armabschnitt verbindet.

Insbesondere weist der Adapterarm einen Adapterarmgrundkörper auf, welcher sich entlang des ersten, zweiten und dritten Armabschnitts erstreckt, wobei die beiden Armflansche insbesondere Bestandteil des Adapterarmgrundkörpers sind.

Insbesondere weist der Adapterarm ein mit dem Adapterarmgrundkörper stoffschlüssig verbundenes Adapterarmdeckblech auf, welches eine offene Oberseite des Adapterarmgrundkörpers abdeckt, und sich insbesondere entlang des ersten, zweiten und dritten Armabschnitts erstreckt. Insbesondere liegt ein dem Anbindungsadapter zugewandtes Deckblechende des Adapterarmdeckblechs an der Zylindermantelfläche des Anbindungsadapters an, und ist mit dieser stoffschlüssig verbunden, insbesondere verschweißt. Das Deckblechende weist insbesondere eine runde Aussparung auf, welche an der Zylindermantelfläche des Anbindungsadapters anliegt.

In einer vorteilhaften Ausführungsform weist die Fahrwerkanordnung zumindest einen endseitigen Anbindungsadapter auf, welcher an einem Ende des Fahrwerkbauteils, insbesondere Längsträger und/oder Querträger des Fahrwerkbauteils, und/oder an einem dem Ende abgewandten weiteren Ende des Fahrwerkbauteils, insbesondere Längsträger und/oder Querträger des Fahrwerkbauteils, stoffschlüssig und/oder kraftschlüssig und/oder formschlüssig befestigt ist, insbesondere direkt befestigt ist.

Dadurch wird der technische Vorteil erreicht, dass eine entsprechende einseitige und/oder zweiseitige endseitige Befestigung des Anbindungsadapters eine wirksame strukturelle Anbindung ermöglicht.

Insbesondere ist eine Zylinderwandungsunterseite des zumindest einen endseitigen Anbindungsadapters mit der Unterseite des Fahrwerkbauteils, insbesondere Längsträger und/oder Querträger, verbunden, insbesondere stoffschlüssig verbunden.

Insbesondere ist in der Oberseite des Fahrwerkbauteils, insbesondere Längsträger und/oder Querträger des Fahrwerkbauteils, eine Oberseitenöffnung des Fahrwerkbauteils, insbesondere Längsträger und/oder Querträger des Fahrwerkbauteils, geformt, durch welche sich der zumindest eine endseitige Anbindungsadapter erstreckt. Insbesondere ist ein die Oberseitenöffnung begrenzender Öffnungsrand mit der Zylindermantelfläche des zumindest einen endseitigen Anbindungsadapters stoffschlüssig verbunden, insbesondere verschweißt. Insbesondere erstreckt sich der zumindest eine endseitige Anbindungsadapter über die Oberseite des Fahrwerkbauteils, insbesondere Längsträger und/oder Querträger des Fahrwerkbauteils, hinaus.

Insbesondere ist der zumindest eine endseitige Anbindungsadapter zumindest abschnittsweise innerhalb des Fahrwerkbauteils, insbesondere Längsträger und/oder Querträger des Fahrwerkbauteils, angeordnet.

In einer vorteilhaften Ausführungsform weist die Fahrwerkanordnung zumindest einen mittigen Anbindungsadapter auf, welcher an einem Mittenbereich des Fahrwerkbauteils, insbesondere Längsträger und/oder Querträger des Fahrwerkbauteils, stoffschlüssig und/oder kraftschlüssig und/oder formschlüssig befestigt ist, wobei der Mittenbereich zwischen einem Ende des Fahrwerkbauteils, insbesondere Längsträger und/oder Querträger des Fahrwerkbauteils, und einem dem Ende abgewandten weiteren Ende des Fahrwerkbauteils, insbesondere Längsträger und/oder Querträger des Fahrwerkbauteils, angeordnet ist, wobei insbesondere der mittige Anbindungsadapter stoffschlüssig und/oder kraftschlüssig und/oder formschlüssig an einem sich von dem Mittenbereich des Längsträger und/oder Querträger des Fahrwerkbauteils, erstreckenden Adapterarm des Fahrwerkbauteils befestigt ist, wobei der Adapterarm stoffschlüssig, insbesondere verschweißt, und/oder kraftschlüssig, insbesondere verschraubt, an dem Mittenbereich des Längsträgers und/oder Querträgers befestigt ist.

Dadurch wird der technische Vorteil erreicht, dass der mittige Anbindungsadapter durch den Adapterarm eine beabstandete Befestigung an einem von dem Längsträger und/oder Querträger beabstandeten Bereich des Fahrzeugbauteils ermöglicht.

In einer vorteilhaften Ausführungsform weist die Fahrwerkanordnung einen ersten Längsträger und einen zweiten Längsträger auf, wobei die Fahrwerkanordnung einen sich quer zu dem ersten und zweiten Längsträger erstreckenden ersten und zweiten Querträger aufweist, wobei der erste und zweite Querträger jeweils stoffschlüssig und/oder kraftschlüssig an dem ersten Längsträger und an dem zweiten Längsträger befestigt sind.

Dadurch wird der technische Vorteil erreicht, dass durch die entsprechenden beiden Längsträger und beiden Querträger eine stabile Fahrwerkanordnung erreicht wird.

Die Ausgestaltung des zweiten Längsträgers entspricht der Ausgestaltung des ersten Längsträgers.

Insbesondere sind der erste und zweite Querträger aus einem Metall, insbesondere Aluminium und/oder Stahl, oder einem Faserverbundkunststoff gebildet. Insbesondere weist der erste und zweite Querträger ein Hohlprofil auf.

Insbesondere sind der erste und zweite Längsträger und/oder der erste und zweite Querträger als ein Rohrformteil geformt, oder sind der erste und zweite Längsträger und/oder der erste und zweite Querträger aus einem umgeformten Blech, welches insbesondere Bestandteil einer Schweißbaugruppe ist, geformt.

Der erste und zweite Längsträger sind insbesondere als ein gekrümmter Längsträger geformt. In Bezug auf eine in der Mitte zwischen dem ersten und zweiten Längsträger angeordnete Mittelachse, welche sich quer zu den Querträgern erstreckt, sind der erste Längsträger und der zweite Längsträger insbesondere im Wesentlichen spiegelsymmetrisch angeordnet.

In einer vorteilhaften Ausführungsform umfasst die Fahrwerkanordnung ein Fahrzeugbauteil, insbesondere einen Fahrzeugboden, und ein Befestigungsmittel, wobei das Befestigungsmittel durch die Befestigungsöffnung in der Zylinderdeckfläche des Anbindungsadapters und eine weitere Befestigungsöffnung des Fahrzeugbauteils geführt und an dem Anbindungsadapter festgelegt ist, um den Fahrwerkbauteil, insbesondere Längsträger und/oder Querträger, an dem Fahrzeugbauteil zu befestigen.

Dadurch wird der technische Vorteil erreicht, dass durch den Anbindungsadapter das Fahrzeugbauteil, insbesondere der Fahrzeugboden, vorteilhaft an dem Fahrwerkbauteil, insbesondere Längsträger und/oder Querträger, befestigt werden kann.

Insbesondere weist das Befestigungsmittel, insbesondere Befestigungsschraube, einen Anschlag auf, welcher an dem die Befestigungsöffnung begrenzenden Öffnungsrand anliegt, und über eine Mutter mittels des Befestigungsschafts des Befestigungsmittels festgelegt ist.

Insbesondere können zwischen dem Befestigungsmittel, insbesondere Befestigungsschraube, und der hohlzylinderförmigen Hülse eine Unterlegscheibe oder reibwerterhöhende Elemente positioniert sein.

Gemäß einem dritten Aspekt betrifft die Offenbarung ein Verfahren zum Herstellen eines Anbindungsadapters zur Befestigung eines Fahrwerkbauteils, insbesondere Längsträger und/oder Querträger des Fahrwerkbauteils, an einem Fahrzeugbauteil, wobei das Verfahren die folgenden Verfahrensschritte umfasst: Bereitstellen eines aus Stahl bestehenden Halbzeugs; Tiefziehen des aus Stahl bestehenden Halbzeugs um einen zylinderförmigen Bereich mit einer Zylinderdeckfläche und einer Zylindermantelfläche zu erhalten; Einbringen einer Befestigungsöffnung in die Zylinderdeckfläche, um den als hohlzylinderförmige Hülse geformten Anbindungsadapter zu erhalten, welcher die Zylinderdeckfläche und die Zylindermantelfläche aufweist, wobei die Zylinderdeckfläche und die Zylindermantelfläche einen Hülseninnenraum der hohlzylinderförmigen Hülse begrenzen, wobei die hohlzylinderförmige Hülse als ein aus Stahl bestehendes einteiliges und materialeinheitliches Tiefziehbauteil geformt ist; und optional Abtrennen des sich von der Zylindermantelfläche erstreckenden Überstands des als hohlzylinderförmige Hülse geformten Anbindungsadapters.

Dadurch wird der technische Vorteil erreicht, dass eine einfache Herstellung des Anbindungsadapters mittels eines Tiefziehverfahrens ermöglicht wird, und gleichzeitig eine ausreichende strukturelle Stabilität der hohlzylinderförmigen Hülse sichergestellt wird.

Insbesondere kann vor dem Verfahrensschritt des Tiefziehens ein Vorloch in das aus Stahl bestehende Halbzeug eingebracht werden, wobei das Vorloch für den nachfolgenden Verfahrensschritt des Einbringens der Befestigungsöffnung in die Zylinderdeckfläche die Position der Befestigungsöffnung festlegt.

Insbesondere kann anstatt des optionalen Abtrennens des sich von der Zylindermantelfläche erstreckenden Überstands des als hohlzylinderförmige Hülse geformten Anbindungsadapters auch optional ein Umbiegen des sich von der Zylindermantelfläche erstreckenden Überstands des als hohlzylinderförmige Hülse geformten Anbindungsadapters durchgeführt werden, so dass der Überstand Teil der Zylindermantelfläche des als hohlzylinderförmige Hülse geformten Anbindungsadapters wird.

Weitere Ausführungsbeispiele werden Bezug nehmend auf die beiliegenden Figuren erläutert. Es zeigen:
- Fig. 1: einen Anbindungsadapter zur Befestigung eines Fahrwerkbauteils, insbesondere Längsträger und/oder Querträger des Fahrwerkbauteils, an einem Fahrzeugbauteil gemäß einer Ausführungsform in einer Schnittansicht;
- Figs. 2A, 2B: einen mit dem Anbindungsadapter der Fig. 1 verbundenen Adapterarm einer Fahrwerkanordnung gemäß einer Ausführungsform in einer seitlichen Ansicht, bzw. in einer Schnittansicht;
- Fig. 3: eine Fahrwerkanordnung mit zwei jeweils mit einem Adapterarm verbundenen Anbindungsadaptern gemäß den Figuren 2A, bzw. 2B und mit vier Anbindungsadaptern gemäß der Fig. 1 gemäß einer Ausführungsform in einer seitlichen Ansicht;
- Figs. 4A, 4B: die in Fig. 3 dargestellte Fahrwerkanordnung umfassend ein durch ein Befestigungsmittel an dem Fahrwerkbauteil, insbesondere Längsträger und/oder Querträger des Fahrwerkbauteils, befestigtes Fahrzeugbauteil gemäß einer Ausführungsform in einer seitlichen Ansicht, bzw. in einer Schnittansicht; und
- Fig. 5: ein Verfahren zum Herstellen eines Anbindungsadapters zur Befestigung eines Fahrwerkbauteils, insbesondere Längsträger und/oder Querträger des Fahrwerkbauteils, an einem Fahrzeugbauteil.

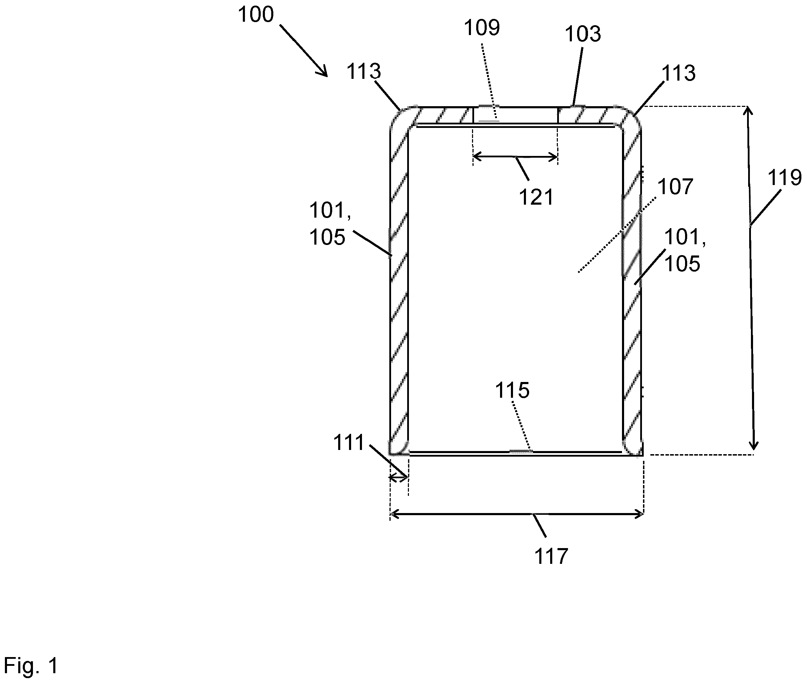

Fig. 1 zeigt einen Anbindungsadapter zur Befestigung eines Fahrwerkbauteils, insbesondere Längsträger und/oder Querträger des Fahrwerkbauteils, an einem Fahrzeugbauteil gemäß einer ersten Ausführungsform in einer Schnittansicht.

Der in der Fig. 1 dargestellte Anbindungsadapter 100 ermöglicht eine wirksame, mechanisch stabile Verbindung zwischen dem in Fig. 1 nicht dargestellten Fahrwerkbauteil, insbesondere Längsträger und/oder Querträger des Fahrwerkbauteils, und dem in Fig. 1 ebenfalls nicht dargestellten Fahrzeugbauteil. Für weitere Details in Bezug auf das Fahrwerkbauteil, insbesondere Längsträger und/oder Querträger des Fahrwerkbauteils, und das Fahrzeugbauteil wird auf die nachfolgenden Ausführungen zu den weiteren Figuren verwiesen.

Der in Fig. 1 dargestellte Anbindungsadapter 100 ist als eine hohlzylinderförmige Hülse 101 geformt, welche eine Zylinderdeckfläche 103 und eine Zylindermantelfläche 105 aufweist. Die Zylinderdeckfläche 103 und die Zylindermantelfläche 105 begrenzen einen Hülseninnenraum 107 der hohlzylinderförmigen Hülse 101.

Aus der Fig. 1 geht hervor, dass in der Zylinderdeckfläche 103 der hohlzylinderförmigen Hülse 101 eine Befestigungsöffnung 109 geformt ist, durch welche ein in Fig. 1 nicht dargestelltes Befestigungsmittel, insbesondere eine Befestigungsschraube, führbar ist, um den Anbindungsadapter 100 an dem in Fig. 1 nicht dargestellten Fahrzeugbauteil zu befestigen.

Die Befestigungsöffnung 109 kann insbesondere als eine kreisrunde, ovale oder langlochförmige Befestigungsöffnung 109 in der Zylinderdeckfläche 103 geformt sein. Die Befestigungsöffnung 109 kann insbesondere mittig in der Zylinderdeckfläche 103, insbesondere an einem Mittelpunkt der Zylinderdeckfläche 103 geformt sein.

Ferner ist die Zylindermantelfläche 105 der hohlzylinderförmigen Hülse 101 an dem in Fig. 1 nicht dargestellten Fahrwerkbauteil, insbesondere Längsträger und/oder Querträger, stoffschlüssig und/oder kraftschlüssig und/oder formschlüssig befestigbar.

Die vorliegende Offenbarung zeichnet sich dadurch aus, dass die aus Stahl bestehende hohlzylinderförmige Hülse 101 als ein einteiliges und materialeinheitliches Tiefziehbauteil geformt ist, also mittels eines Tiefziehvorgangs hergestellt wird. Die mittels des Tiefziehvorgangs hergestellte hohlzylinderförmige Hülse 101 ermöglicht eine besonders einfache Herstellung des Anbindungsadapters 100, wobei die tiefgezogene Hülse 101 hierbei insbesondere eine Wandstärke 111 zwischen 1,5 mm und 5 mm, bevorzugt zwischen 2 mm und 4 mm, aufweist, was eine ausreichende strukturelle Stabilität bereitstellt, um zwischen dem Fahrzeugbauteil und dem Fahrwerkbauteil, insbesondere Längsträger und/oder Querträger, wirkende Kräfte vorteilhaft aufnehmen zu können.

Aus der Ausführungsform gemäß der Fig. 1 ist zu entnehmen, dass die Zylinderdeckfläche 103 und die Zylindermantelfläche 105 der hohlzylinderförmigen Hülse 101 dieselbe Wandstärke 111 zwischen 1,5 mm und 5 mm, bevorzugt zwischen 2 mm und 4 mm, aufweisen.

Wie aus der Fig. 1 hervorgeht, weist die hohlzylinderförmige Hülse 101 einen die Hülse 101 umlaufenden Übergangsbereich 113 auf, welcher zwischen der Zylinderdeckfläche 103 und der Zylindermantelfläche 105 der hohlzylinderförmigen Hülse 101 geformt ist, wobei der die Hülse 101 umlaufende Übergangsbereich 113 insbesondere als ein abgerundeter Rand der Zylinderdeckfläche 103 ausgebildet ist.

Herstellungsbedingt kann der umlaufende Übergangsbereich 113, insbesondere der abgerundete Rand der Zylinderdeckfläche 103, eine Wandstärke 111 aufweisen, welche minimal, insbesondere weniger als 20%, geringer ist als die Wandstärke 111 der Zylinderdeckfläche 103 und der Zylindermantelfläche 105 der hohlzylinderförmigen Hülse 101. Insbesondere weist der umlaufende Übergangsbereich 113, insbesondere der abgerundete Rand der Zylinderdeckfläche 103, eine Wandstärke 111 zwischen 1,0 mm und 5 mm auf.

Aus der Fig. 1 ist ferner zu entnehmen, dass die hohlzylinderförmige Hülse 101 an einer der Zylinderdeckfläche 103 gegenüberliegenden Unterseite 115 der hohlzylinderförmigen Hülse 101 keine Zylinderbodenfläche aufweist, wodurch das Gewicht der hohlzylinderförmigen Hülse 101 reduziert werden kann, ohne die strukturelle Stabilität der hohlzylinderförmigen Hülse 101 einzuschränken.

Die hohlzylinderförmige Hülse 101 weist insbesondere einen Außendurchmesser 117 zwischen 30 mm und 150 mm auf, bevorzugt zwischen 40 mm und 80 mm. Die hohlzylinderförmige Hülse 101 weist insbesondere eine Höhe 119 zwischen 30 mm und 200 mm auf.

Insbesondere weist die Befestigungsöffnung 109 in der Zylinderdeckfläche 103 einen Öffnungsdurchmesser 121 zwischen 7 mm und 30 mm auf.

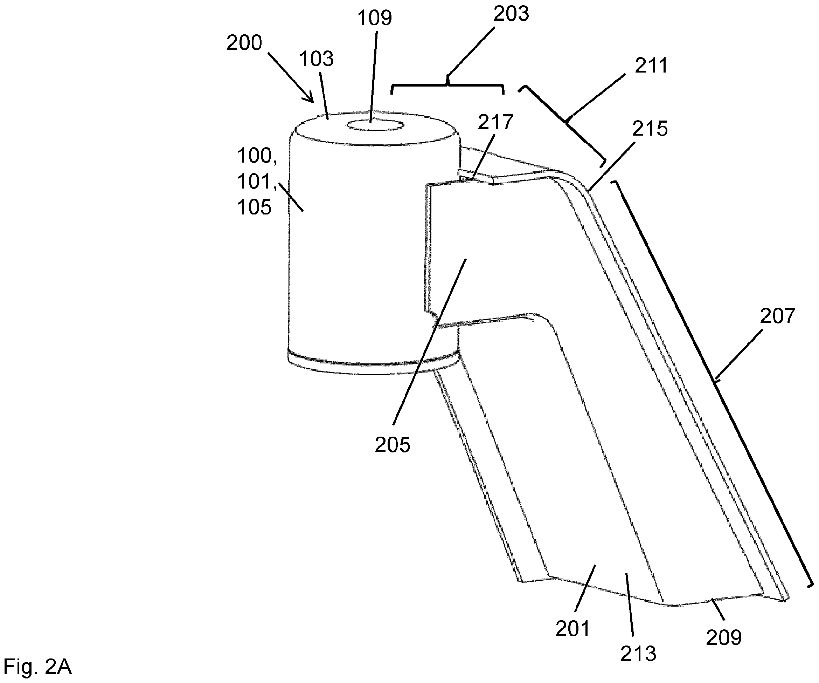

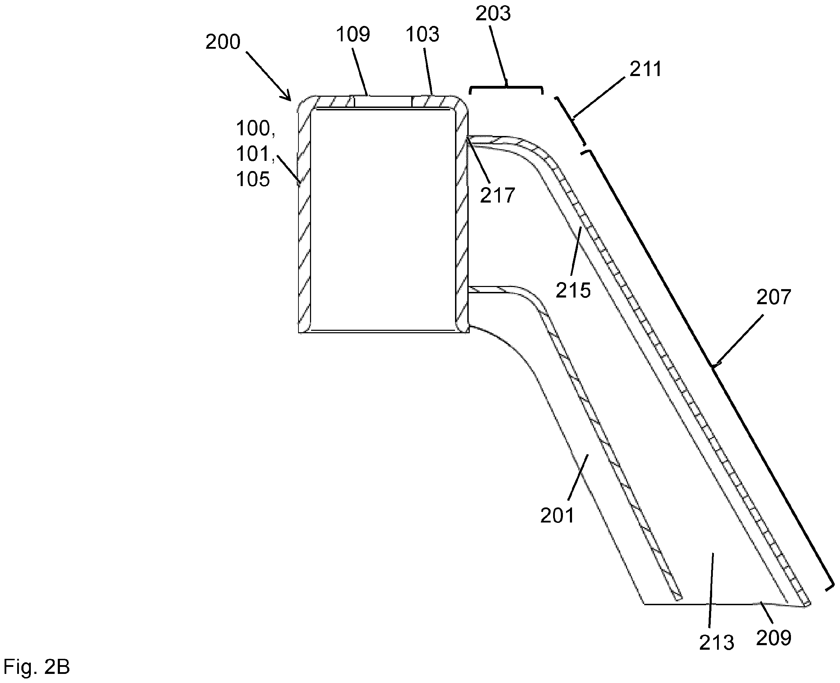

Die Figuren 2A und 2B zeigen einen mit dem Anbindungsadapter der Fig. 1 verbundenen Adapterarm einer Fahrwerkanordnung gemäß einer Ausführungsform in einer seitlichen Ansicht, bzw. in einer Schnittansicht.

Insbesondere ist in der Fig. 2A die seitliche Ansicht und ist in der Fig. 2B die Schnittansicht gezeigt.

In der Fig. 2A und 2B sind nur der Adapterarm 201 der Fahrwerkanordnung 200 gezeigt, wobei für die weiteren Details in Bezug auf die Fahrwerkanordnung 200 auf die nachfolgenden Figuren verwiesen wird. Der in der Fig. 2A, bzw. 2B gezeigte Anbindungsadapter 100 entspricht dem in der Fig. 1 gezeigten Anbindungsadapter 100, so dass hierzu für weitere Details auf die vorangegangenen Ausführungen zur Fig. 1 verwiesen wird. Das Fahrwerkbauteil umfasst hierbei den Adapterarm 201.

Wie aus der Fig. 2A, bzw. 2B zu entnehmen ist, ist der Anbindungsadapter 100 stoffschlüssig an dem Adapterarm 201 befestigt, wobei hierbei der Adapterarm 201 insbesondere mit dem Anbindungsadapter 100 verschweißt ist. Eine kraftschlüssige und/oder formschlüssige Befestigung ist alternativ oder zusätzlich auch möglich.

Insbesondere weist der Adapterarm 201 hierbei an einem dem Anbindungsadapter 100 zugewandten ersten Armabschnitt 203 zwei Armflansche 205 auf, welche an der Zylindermantelfläche 105 der hohlzylinderförmigen Hülse 101 des Anbindungsadapters 100 anliegen, und mit der Zylindermantelfläche 105 stoffschlüssig verbunden, insbesondere verschweißt sind. Eine kraftschlüssige und/oder formschlüssige Befestigung ist alternativ oder zusätzlich auch möglich. Wie aus der Fig. 2A, bzw. 2B hervorgeht, erstreckt sich der erste Armabschnitt 203 horizontal.

Insbesondere weist der Adapterarm 201 hierbei einen dem Anbindungsadapter 100, bzw. dem ersten Armabschnitt 203 abgewandten zweiten Armabschnitt 207 auf, wobei ein zweites Armabschnittende 209 des zweiten Armabschnitts 207 hierbei mit dem in Fig. 2A, 2B nicht dargestellten Längsträger und/oder Querträger des Fahrwerkbauteils stoffschlüssig verbunden, insbesondere verschweißt, und/oder kraftschlüssig verbunden, insbesondere verschraubt, ist. Wie aus der Fig. 2A, 2B hervorgeht, erstreckt sich der zweite Armabschnitt 207 schräg vertikal.

Insbesondere weist der Adapterarm 201 einen dritten gekrümmten Armabschnitt 211 auf, welcher den ersten, insbesondere horizontalen Armabschnitt 203, mit dem zweiten, insbesondere schräg vertikalen, Armabschnitt 207 verbindet.

Aus der Fig. 2A, bzw. 2B ist ferner zu entnehmen, dass der Adapterarm 201 einen Adapterarmgrundkörper 213 aufweist, welcher sich entlang des ersten, zweiten und dritten Armabschnitts 203, 207, 211 erstreckt, wobei die beiden Armflansche 205 insbesondere Bestandteil des Adapterarmgrundkörpers 213 sind.

Aus der Fig. 2A, bzw. 2B ist ferner zu entnehmen, dass der Adapterarm 201 ein mit dem Adapterarmgrundkörper 213 stoffschlüssig verbundenes Adapterarmdeckblech 215 aufweist, welches eine in Fig. 2A, bzw. 2B nicht dargestellte offene Oberseite des Adapterarmgrundkörpers 213 abdeckt, und sich entlang des ersten, zweiten und dritten Armabschnitts 203, 207, 211 erstreckt. Insbesondere liegt ein dem Anbindungsadapter 100 zugewandtes Deckblechende 217 des Adapterarmdeckblechs 215 an der Zylindermantelfläche 105 des Anbindungsadapters 100 an, und ist mit dieser stoffschlüssig verbunden, insbesondere verschweißt. Das Deckblechende 217 weist hierbei insbesondere eine runde Aussparung auf, welche an der Zylindermantelfläche 105 des Anbindungsadapters 100 anliegt.

Auch wenn dies in der Fig. 2A, bzw. 2B nicht dargestellt ist, kann der in Fig. 2A, bzw. 2B dargestellte Anbindungsadapter 100 auch ohne den Adapterarm 201 direkt an dem Längsträger und/oder Querträger stoffschlüssig und/oder kraftschlüssig befestigt sein. Hierzu wird auf die weiteren Figuren verwiesen.

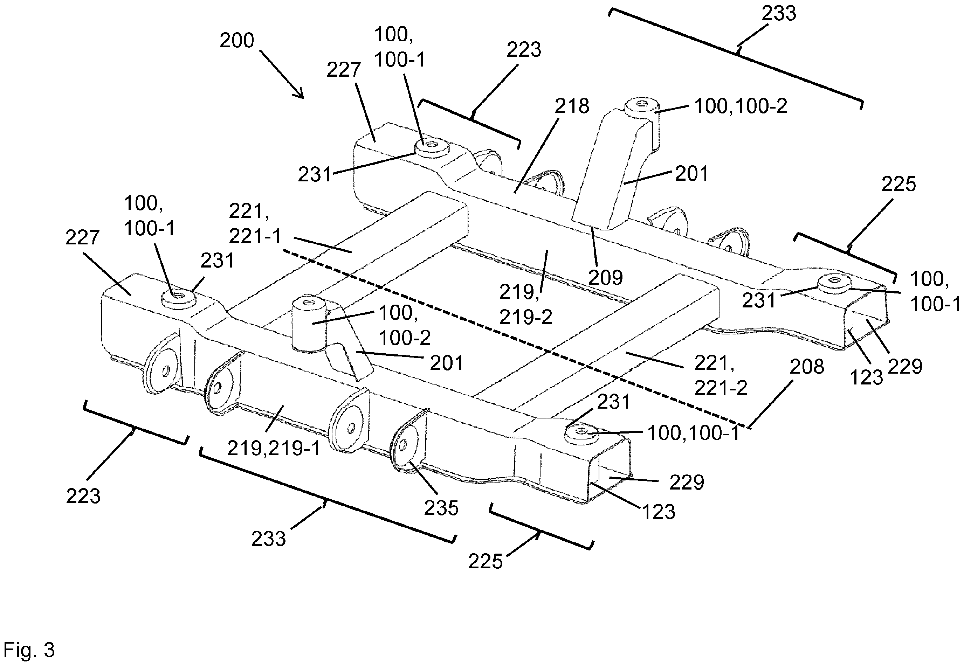

Fig. 3 zeigt eine Fahrwerkanordnung mit zwei jeweils mit einem Adapterarm verbundenen Anbindungsadaptern gemäß den Figuren 2A, bzw. 2B und mit vier Anbindungsadaptern gemäß der Fig. 1 gemäß einer Ausführungsform in einer seitlichen Ansicht.

Die Fahrwerkanordnung 200 umfasst das Fahrwerkbauteil 218 selbst. Der Fahrwerkbauteil 218 umfasst zumindest einen Längsträger 219, insbesondere einen ersten Längsträger 219-1 und einen zweiten Längsträger 219-2, welche sich nebeneinander erstrecken. Die Fahrwerkanordnung 200 umfasst zumindest einen Querträger 221, insbesondere einen ersten Querträger 221-1 und einen zweiten Querträger 221-2, welche sich nebeneinander erstrecken. Der erste und zweite Querträger 221-1, 221-2 erstrecken sich quer zu dem ersten und zweiten Längsträger 219-1, 219-2. Der erste und zweite Querträger 221-1, 221-2 sind jeweils stoffschlüssig und/oder kraftschlüssig an dem ersten Längsträger 219-1 und an dem zweiten Längsträger 219-2 befestigt, insbesondere verschweißt und/oder verschraubt.

Im eingebauten Zustand des Fahrwerkbauteils 218 erstrecken sich der Längsträger 219-1 und der zweite Längsträger 219-2 im Wesentlichen entlang einer in Fig. 3 nicht dargestellten Fahrtrichtung, und erstrecken sich der erste und zweite Querträger 221-1, 221-2 im Wesentlichen quer zu der nicht dargestellten Fahrtrichtung.

Der erste Längsträger 219-1 und der zweite Längsträger 219-2 sind hierbei als ein umgeformtes Blechteil, welches Bestandteil einer Schweißbaugruppe ist, geformt und weisen ein Hohlprofil auf. Der erste und zweite Querträger 221-1, 221-2 können insbesondere ebenfalls als ein umgeformtes Blechteil, welches Bestandteil einer Schweißbaugruppe ist, geformt sein und/oder ein Hohlprofil aufweisen. Die Querträger 221-1, 221-2 sind hierbei insbesondere als sich gerade erstreckende Querträger 221-1, 221-2 geformt. Alternativ können die Längsträger 219-1, 219-2 und/oder die Querträger 221-1, 221-2 auch als ein Rohrformteil geformt sein, wobei ein derartiges Rohrformteil durch Formen einer im Querschnitt U-förmigen oder O-förmigen Platine herstellbar ist.

Die Längsträger 219-1, 219-2 sind insbesondere als gekrümmte Längsträger 219-1, 219-2 geformt. In Bezug auf eine in der Mitte zwischen Längsträgern 219-1, 219-2 angeordnete Fahrwerkbauteilmittelachse 208, welche sich quer zu den Querträgern 221-1, 221-2 erstreckt, sind der erste Längsträger 219-1 und der zweite Längsträger 219-2 im Wesentlichen spiegelsymmetrisch angeordnet.

In der Fig. 3 sind vier Anbindungsadapter 100 dargestellt, welche direkt mit dem jeweiligen Längsträger 219, 219-1, 219-2 verbunden sind. Diese vier Anbindungsadapter 100, werden nachfolgend als endseitige Anbindungsadapter 100-1 bezeichnet. Die endseitigen Anbindungsadapter 100-1 sind an Enden 223 des ersten, bzw. zweiten Längsträgers 219-1, 219-2 bzw. an den Enden 223 abgewandten weiteren Enden 225 des ersten, bzw. zweiten Längsträgers 219-1, 219-2 stoffschlüssig angeordnet, insbesondere verschweißt. Eine kraftschlüssige und/oder formschlüssige Befestigung ist alternativ oder zusätzlich auch möglich.

Wie in der Fig. 3 zu erkennen ist, ist jeweils ein endseitiger Anbindungsadapter 100-1 an jeweils einem Ende 223, bzw. weiteren Ende 225 des ersten, bzw. zweiten Längsträgers 219-1, 219-2 angeordnet.

Die endseitigen Anbindungsadapter 100-1 sind insbesondere zumindest abschnittsweise innerhalb des jeweiligen Längsträgers 219-1, 219-2 angeordnet, wie dies aus der Fig. 3 zu entnehmen ist.

Insbesondere ist hierbei jeweils eine Zylinderwandungsunterseite 123 des jeweiligen endseitigen Anbindungsadapters 100-1 mit einer jeweiligen Unterseite 229 des jeweiligen Längsträgers 219-1, 219-2 verbunden, insbesondere stoffschlüssig verbunden.

Insbesondere ist in der Oberseite 227 des jeweiligen Längsträgers 219-1, 219-2 eine Oberseitenöffnung 231 des jeweiligen Längsträgers 219-1, 219-2 geformt, durch welche sich der jeweilige endseitige Anbindungsadapter 100-1 erstreckt. Insbesondere ist ein die jeweilige Oberseitenöffnung 231 begrenzender und in der Fig. 3 nicht gekennzeichneter Öffnungsrand mit der Zylindermantelfläche 105 des jeweiligen endseitigen Anbindungsadapters 100-1 stoffschlüssig verbunden, insbesondere verschweißt. Insbesondere erstreckt sich der jeweilige endseitige Anbindungsadapter 100-1 über die jeweilige Oberseite 227 des jeweiligen Längsträgers 219-1, 219-2 hinaus.

In der Fig. 3 sind zwei Anbindungsadapter 100 dargestellt, welche über den jeweiligen Adapterarm 201 mit dem jeweiligen Längsträger 119-1, 119-2 verbunden sind. Diese zwei Anbindungsadapter 100, werden nachfolgend als mittige Anbindungsadapter 100-2 bezeichnet. Die beiden mittigen Anbindungsadapter 100-2 sind mittels des jeweils Adapterarms 201 an jeweils einem Mittenbereich 233 des jeweiligen Längsträgers 119, 119-1, 119-2 befestigt, wobei der jeweilige Mittenbereich 233, wie in der Fig. 3 dargestellt ist, sich zwischen dem jeweiligen Ende 223 und dem jeweiligen weiteren Ende 225 des ersten, bzw. zweiten Längsträgers 219-1, 219-2 erstreckt.

Wie bereits in Bezug auf die Figuren 2A und 2B ausgeführt wurde, ist ein zweites Armabschnittende 209 des zweiten Armabschnitts 207 des jeweiligen Adapterarms 201 hierbei mit dem jeweiligen ersten, bzw. zweiten Längsträger 219-1, 219-2, insbesondere mit dem jeweiligen Mittenbereich 233 des jeweiligen Längsträgers 219, 219-1, 219-2 stoffschlüssig verbunden, insbesondere verschweißt. Eine kraftschlüssige Befestigung ist alternativ oder zusätzlich auch möglich.

Ferner ist an dem jeweiligen ersten, bzw. zweiten Längsträger 219-1, 219-2 eine Mehrzahl von Befestigungsabschnitten 235 angeordnet, welche ausgebildet sind die Fahrwerkanordnung 200 an einem weiteren Fahrzeugbauteil, insbesondere Fahrzeugboden, zu befestigen.

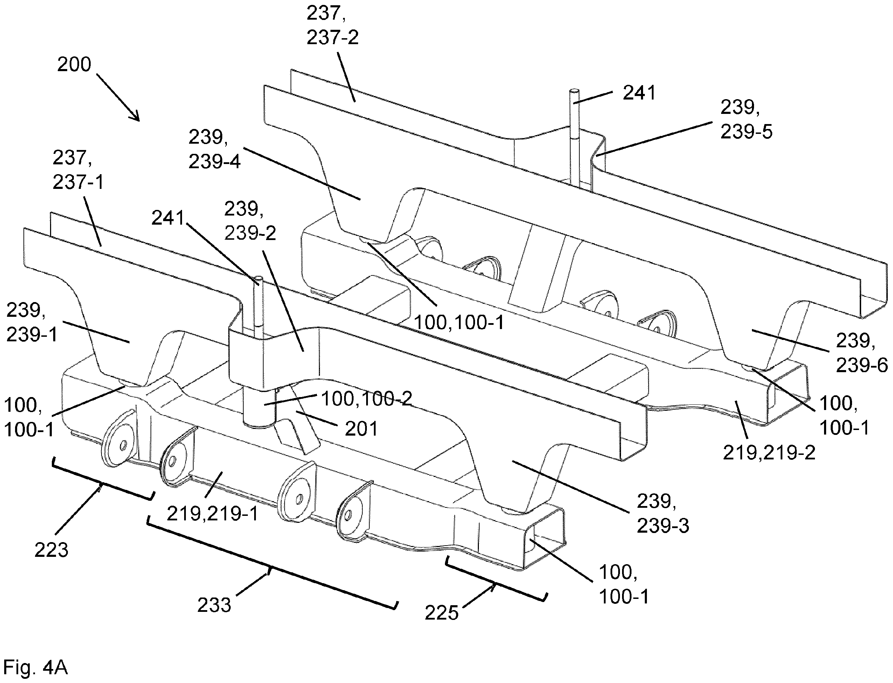

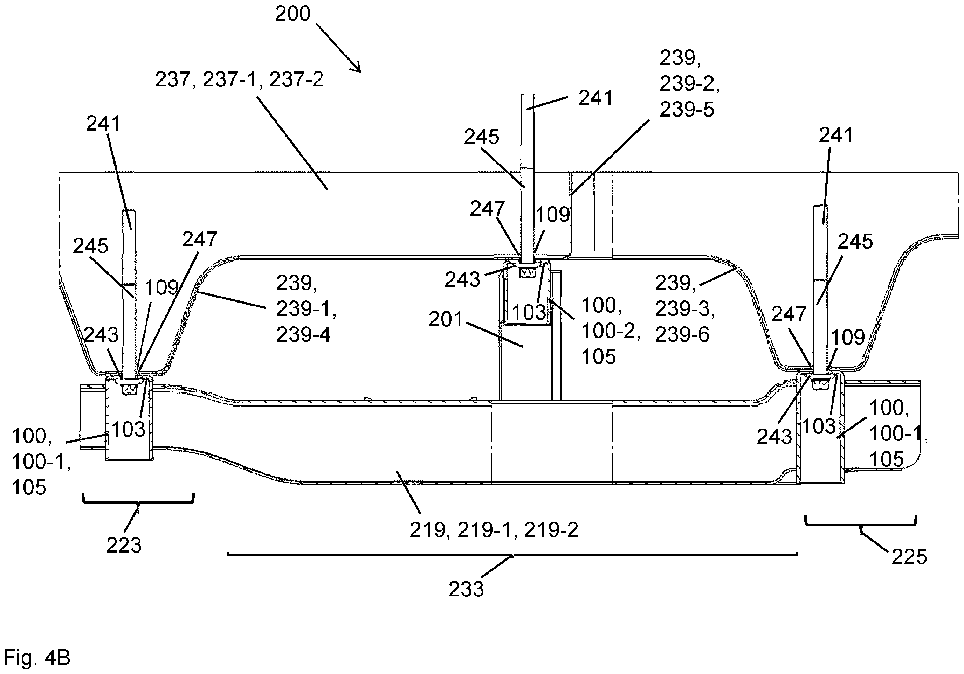

Für die Anbindung der Anbindungsadapter 100, insbesondere der mittigen Anbindungsadapter 100-2 und der endseitigen Anbindungsadapter 100-1, an das Fahrzeugbauteil wird auf die nachfolgende Fig. 4A und Fig. 4B verwiesen.

Die Figuren 4A und 4B zeigen die in Fig. 3 dargestellte Fahrwerkanordnung 200 umfassend ein durch ein Befestigungsmittel an dem Fahrwerkbauteil, insbesondere Längsträger und/oder Querträger des Fahrwerkbauteils, befestigtes Fahrzeugbauteil gemäß einer Ausführungsform in einer seitlichen Ansicht, bzw. in einer Schnittansicht.

Die Figur 4A zeigt hierbei die seitliche Ansicht der Fahrwerkanordnung 200, während die Figur 4B hierbei die Schnittansicht durch die Fahrwerkanordnung 200 zeigt.

Die in den Figuren 4A und 4B dargestellte Fahrwerkanordnung 200 unterscheidet sich von der in der Figur 3 dargestellten Fahrwerkanordnung 200 dadurch, dass in den Figuren 4A und 4B zusätzlich noch das Fahrzeugbauteil 237 gezeigt ist, welches durch insbesondere als Befestigungsschrauben ausgebildete Befestigungsmittel 241, an dem Fahrwerkbauteil 218, insbesondere an dem ersten und zweiten Längsträger 219, 219-1, 219-2, befestigt ist.

Das Fahrzeugbauteil 237, ist hierbei insbesondere als ein Fahrzeugboden ausgebildet. Auch wenn in den Figuren 4A und 4B das Fahrzeugbauteil 237, insbesondere der Fahrzeugboden nur abschnittweise durch einen ersten Fahrzeugbauteilabschnitt 237-1 und durch einen zweiten Fahrzeugbauteilabschnitt 237-2 dargestellt ist, sind die beiden Abschnitte 237-1, 237-2 durch in den Figuren 4A und 4B nicht dargestellte Bereiche miteinander verbunden, wobei das Fahrzeugbauteil 237 hierbei insbesondere als ein mehrteiliges Bauteil ausgebildet ist.

Das Fahrzeugbauteil 237 weist insbesondere eine Mehrzahl von Befestigungsvorsprüngen 239 auf, welche durch die jeweiligen Befestigungsmittel 241 an dem jeweiligen ersten, bzw. zweiten Längsträger 219-1, 219-2 befestigt sind.

Ein erster Befestigungsvorsprung 239-1 ist hierbei insbesondere mit dem an dem Ende 223 des ersten Längsträgers 119-1 angeordneten endseitigen Anbindungsadapter 100-1 durch ein Befestigungsmittel 241 verbunden.

Ein zweiter Befestigungsvorsprung 239-2 ist hierbei insbesondere mit dem an dem Mittenbereich 233 des ersten Längsträgers 119-1 angeordneten mittigen Anbindungsadapter 100-2 durch ein Befestigungsmittel 241 verbunden.

Ein dritter Befestigungsvorsprung 239-3 ist hierbei insbesondere mit dem an dem weiteren Ende 225 des ersten Längsträgers 119-1 angeordneten endseitigen Anbindungsadapter 100-1 durch ein Befestigungsmittel 241 verbunden.

Ein vierter Befestigungsvorsprung 239-4 ist hierbei insbesondere mit dem an dem Ende 223 des zweiten Längsträgers 119-2 angeordneten endseitigen Anbindungsadapter 100-1 durch ein Befestigungsmittel 241 verbunden.

Ein fünfter Befestigungsvorsprung 239-5 ist hierbei insbesondere mit dem an dem Mittenbereich 233 des zweiten Längsträgers 119-2 angeordneten mittigen Anbindungsadapter 100-2 durch ein Befestigungsmittel 241 verbunden.

Ein sechster Befestigungsvorsprung 239-6 ist hierbei insbesondere mit dem an dem weiteren Ende 225 des zweiten Längsträgers 119-2 angeordneten endseitigen Anbindungsadapter 100-1 durch ein Befestigungsmittel 241 verbunden.

In der Schnittansicht gemäß der Fig. 4B kann für den ersten, bzw. zweiten Längsträger219-1, 219-2 die Anbindung des Fahrzeugbauteils 237, insbesondere des Fahrzeugbodens, mittels der Befestigungsmittel 241, insbesondere Befestigungsschrauben, wirksam erkannt werden.

Das jeweilige Befestigungsmittel 241, insbesondere Befestigungsschraube, ist hierbei durch die jeweilige Befestigungsöffnung 109 des jeweiligen Anbindungsadapters 100, 100-1, 100-2 geführt, und weist einen jeweiligen Anschlag 243 auf, welcher an dem jeweiligen die Oberseitenöffnung 231 begrenzenden und in der Fig. 4B nicht gekennzeichneten Öffnungsrand anliegt, und jeweils über eine in der Fig. 4B nicht dargestellte Mutter mittels des jeweiligen Befestigungsschafts festgelegt ist.

Das jeweilige Befestigungsmittel 241, insbesondere der Befestigungsschaft 245, ist hierbei durch die jeweilige Befestigungsöffnung 109 in der Zylinderdeckfläche 103 des jeweiligen Anbindungsadapters 100 und eine in Fig. 4B nicht gezeigte weitere Befestigungsöffnung 247 des Fahrzeugbauteils 237 geführt, und an dem Anbindungsadapter 100 festgelegt, um den Anbindungsadapter 100 an dem Fahrzeugbauteil 237 zu befestigen.

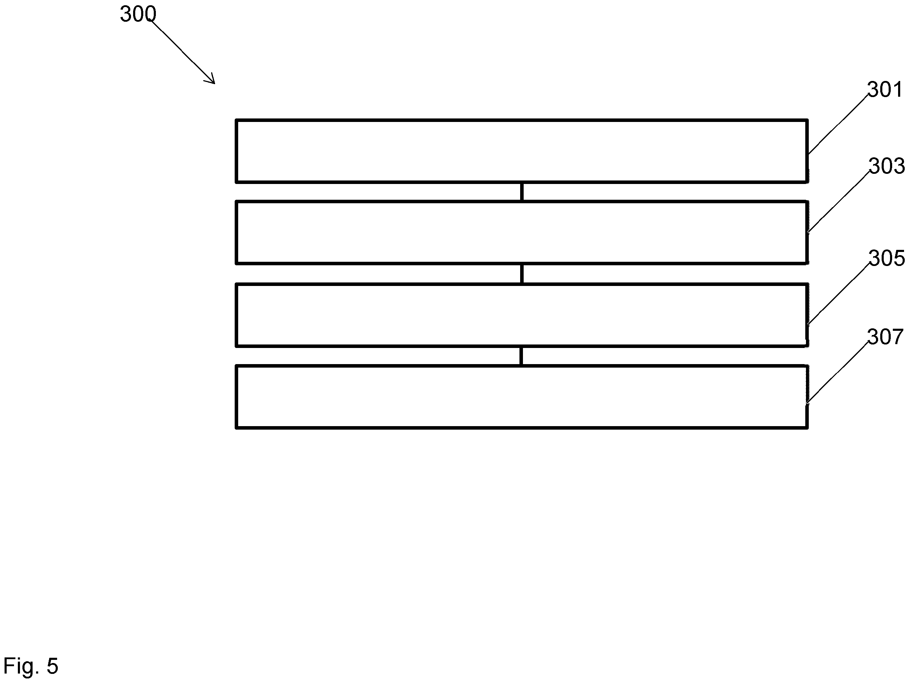

Fig. 5 zeigt ein Verfahren zum Herstellen eines Anbindungsadapters zur Befestigung eines Fahrwerkbauteils, insbesondere Längsträger und/oder Querträger des Fahrwerkbauteils, an einem Fahrzeugbauteil.

Das Verfahren 300 umfasst als Verfahrensschritt das Bereitstellen 301 eines aus Stahl bestehenden Halbzeugs.

Das Verfahren 300 umfasst als Verfahrensschritt das Tiefziehen 303 des aus Stahl bestehenden Halbzeugs um einen hohlzylinderförmigen Bereich mit einer Zylinderdeckfläche 103 und einer Zylindermantelfläche 105 zu erhalten.

Das Verfahren 300 umfasst als Verfahrensschritt das Einbringen 305 einer Befestigungsöffnung 109 in die Zylinderdeckfläche 103, um den als hohlzylinderförmige Hülse 101 geformten Anbindungsadapter 100, 100-1, 100-2 zu erhalten, welcher die Zylinderdeckfläche 103 und die Zylindermantelfläche 105 aufweist, wobei die Zylinderdeckfläche 103 und die Zylindermantelfläche 105 einen Hülseninnenraum 107 der hohlzylinderförmigen Hülse 101 begrenzen.

Insbesondere kann vor dem Verfahrensschritt des Tiefziehens 303 ein Vorloch in das aus Stahl bestehende Halbzeug eingebracht werden, wobei das Vorloch für den nachfolgenden Verfahrensschritt des Einbringens 305 der Befestigungsöffnung 109 in die Zylinderdeckfläche 103 die Position der Befestigungsöffnung 109 festlegt.

Das Verfahren 300 umfasst als optionalen Verfahrensschritt das Abtrennen 307 des sich von der Zylindermantelfläche 105 erstreckenden Überstands des als hohlzylinderförmige Hülse geformten Anbindungsadapters.

Insbesondere kann anstatt des optionalen Abtrennens des sich von der Zylindermantelfläche 105 erstreckenden Überstands des als hohlzylinderförmige Hülse 101 geformten Anbindungsadapters 100 auch optional ein Umbiegen des sich von der Zylindermantelfläche 105 erstreckenden Überstands des als hohlzylinderförmige Hülse 101 geformten Anbindungsadapters 100 durchgeführt werden, so dass das der Überstand Teil der Zylindermantelfläche 105 des als hohlzylinderförmige Hülse 101 geformten Anbindungsadapters 100 wird.

### Bezugszeichenliste

- 100: Anbindungsadapter
- 100-1: Endseitiger Anbindungsadapter
- 100-2: Mittiger Anbindungsadapter
- 101: Hohlzylinderförmige Hülse
- 103: Zylinderdeckfläche
- 105: Zylindermantelfläche
- 107: Hülseninnenraum
- 109: Befestigungsöffnung
- 111: Wandstärke
- 113: Übergangsbereich
- 115: Unterseite der hohlzylinderförmigen Hülse
- 117: Außendurchmesser der hohlzylinderförmigen Hülse
- 119: Höhe der hohlzylinderförmigen Hülse
- 121: Öffnungsdurchmesser der hohlzylinderförmigen Hülse
- 123: Zylinderwandungsunterseite
- 200: Fahrwerkanordnung
- 201: Adapterarm
- 203: Erster Armabschnitt
- 205: Armflansch
- 207: Zweiter Armabschnitt
- 208: Mittelachse
- 209: Zweites Armabschnittende
- 211: Dritter Armabschnitt
- 213: Adapterarmgrundkörper
- 215: Adapterarmdeckblech
- 217: Deckblechende
- 218: Fahrwerkbauteil
- 219: Längsträger
- 219-1: Erster Längsträger
- 219-2: Zweiter Längsträger
- 221: Querträger
- 221-1: Erster Querträger
- 221-2: Zweiter Querträger
- 223: Ende des ersten, bzw. zweiten Längsträgers
- 225: Weiteres Ende des ersten, bzw. zweiten Längsträgers
- 227: Oberseite des ersten, bzw. zweiten Längsträgers
- 229: Unterseite des ersten, bzw. zweiten Längsträgers
- 231: Oberseitenöffnung des ersten, bzw. zweiten Längsträgers
- 233: Mittenbereich des ersten, bzw. zweiten Längsträgers
- 235: Befestigungsbereich
- 237: Fahrzeugbauteil
- 237-1: Erster Fahrzeugbauteilabschnitt
- 237-2: Zweiter Fahrzeugbauteilabschnitt
- 239: Befestigungsabschnitte
- 239-1: Erster Befestigungsabschnitt
- 239-2: Zweiter Befestigungsabschnitt
- 239-3: Dritter Befestigungsabschnitt
- 239-4: Vierter Befestigungsabschnitt
- 239-5: Fünfter Befestigungsabschnitt
- 239-6: Sechster Befestigungsabschnitt
- 241: Befestigungsmittel
- 243: Anschlag
- 245: Befestigungsschaft
- 247: Weitere Befestigungsöffnung des Fahrzeugbauteils
- 300: Verfahren zum Herstellen eines Anbindungsadapters zur Befestigung eines Fahrwerkbauteils, insbesondere Längsträger und/oder Querträger des Fahrwerkbauteils, an einem Fahrzeugbauteil
- 301: Verfahrensschritt: Bereitstellen eines aus Stahl bestehenden Halbzeugs
- 303: Verfahrensschritt: Tiefziehen des aus Stahl bestehenden Halbzeugs
- 305: Verfahrensschritt: Einbringen einer Befestigungsöffnung in das aus Stahl bestehende Halbzeug
- 307: Verfahrensschritt: Abtrennen des sich von der Zylindermantelfläche erstreckenden Überstands

## Patentansprüche

1. Anbindungsadapter (100, 100-1, 100-2) zur Befestigung eines Fahrwerkbauteils (218, 219, 219-1, 219-2, 221, 221-1, 221-2) an einem Fahrzeugbauteil (237), wobei der Anbindungsadapter (100, 100-1, 100-2) als eine hohlzylinderförmige Hülse (101) geformt ist, welche eine Zylinderdeckfläche (103) und eine Zylindermantelfläche (105) aufweist, wobei die Zylinderdeckfläche (103) und die Zylindermantelfläche (105) einen Hülseninnenraum (107) der hohlzylinderförmigen Hülse (101) begrenzen, **dadurch gekennzeichnet, dass**
die Zylindermantelfläche (105) an dem Fahrwerkbauteil (218, 219, 219-1, 219-2, 221, 221-1, 221-2) stoffschlüssig und/oder kraftschlüssig und/oder formschlüssig befestigbar ist, dass
in der Zylinderdeckfläche (103) eine Befestigungsöffnung (109) geformt ist, durch welche ein Befestigungsmittel (241) führbar ist, um den Anbindungsadapter (100, 100-1, 100-2) an dem Fahrzeugbauteil (237) zu befestigen, und dass
die hohlzylinderförmige Hülse (101) als ein aus Stahl bestehendes einteiliges und materialeinheitliches Tiefziehbauteil geformt ist.

2. Anbindungsadapter (100, 100-1, 100-2) nach Anspruch 1, **dadurch gekennzeichnet, dass** die Zylinderdeckfläche (103) und/oder die Zylindermantelfläche (105) der hohlzylinderförmigen Hülse (101) eine Wandstärke (111) zwischen 1,5 mm und 5 mm aufweisen, bevorzugt zwischen 2 mm und 4 mm.

3. Anbindungsadapter (100, 100-1, 100-2) nach Anspruch 1 oder 2, **dadurch gekennzeichnet, dass** die hohlzylinderförmige Hülse (101) einen die Hülse (101) umlaufenden Übergangsbereich (113) aufweist, welcher zwischen der Zylinderdeckfläche (103) und der Zylindermantelfläche (105) der hohlzylinderförmigen Hülse (101) geformt ist, wobei der die Hülse (101) umlaufende Übergangsbereich (113) insbesondere als ein abgerundeter Rand der Zylinderdeckfläche (103) ausgebildet ist.

4. Anbindungsadapter (100, 100-1, 100-2) nach Anspruch 3, **dadurch gekennzeichnet, dass** der umlaufende Übergangsbereich (113), insbesondere der abgerundete Rand der Zylinderdeckfläche (103) eine Wandstärke (111) zwischen 1,0 mm und 5 mm aufweist.

5. Anbindungsadapter (100, 100-1, 100-2) nach einem der vorangehenden Ansprüche, **dadurch gekennzeichnet, dass** die hohlzylinderförmige Hülse (101) an einer der Zylinderdeckfläche (103) gegenüberliegenden Unterseite (115) der hohlzylinderförmigen Hülse (101) keine Zylinderbodenfläche aufweist.

6. Anbindungsadapter (100, 100-1, 100-2) nach einem der vorangehenden Ansprüche, **dadurch gekennzeichnet, dass** die hohlzylinderförmige Hülse (101) einen Außendurchmesser (117) zwischen 30 mm und 150 mm aufweist, bevorzugt zwischen 40 mm und 80 mm, und/oder dass die hohlzylinderförmige Hülse (101) eine Höhe (119) zwischen 30 mm und 200 mm aufweist, und/oder dass die Befestigungsöffnung (109) in der Zylinderdeckfläche (103) einen Öffnungsdurchmesser (121) zwischen 7 mm und 30 mm aufweist.

7. Anbindungsadapter (100, 100-1, 100-2) nach einem der vorangehenden Ansprüche, **dadurch gekennzeichnet, dass** die Zylindermantelfläche (105) mit dem Fahrwerkbauteil (218, 219, 219-1, 219-2, 221, 221-1, 221-2) verschweißbar und/oder verschraubbar ist.

8. Fahrwerkanordnung (200) in einem Fahrzeug, umfassend:
ein Fahrwerkbauteil (218, 219, 219-1, 219-2, 221, 221-1, 221-2), und
zumindest einen Anbindungsadapter (100, 100-1, 100-2) nach einem der Ansprüche 1 bis 7, wobei die Zylindermantelfläche (105) des zumindest einen Anbindungsadapters (100, 100-1, 100-2) an dem Fahrwerkbauteil (218, 219, 219-1, 219-2, 221, 221-1, 221-2) stoffschlüssig und/oder kraftschlüssig und/oder formschlüssig befestigt ist.

9. Fahrwerkanordnung (200) nach Anspruch 8, **dadurch gekennzeichnet, dass** das Fahrwerkbauteil (218, 219, 219-1, 219-2, 221, 221-1, 221-2) ein Vorderachsträger, ein Hinterachsträger, oder eine Verbundlenkerachse ist, die insbesondere einen Längsträger (219, 219-1, 219-2) und/oder einen Querträger (221, 221-1, 221-2) umfasst.

10. Fahrwerkanordnung (200) nach Anspruch 8 oder 9, **dadurch gekennzeichnet, dass** der zumindest eine Anbindungsadapter (100, 100-1, 100-2) an dem Fahrwerkbauteil (218, 219, 219-1, 219-2, 221, 221-1, 221-2), insbesondere Längsträger (219, 219-1, 219-2) und/oder Querträger (221, 221-1, 221-2) des Fahrwerkbauteils (218, 219, 219-1, 219-2, 221, 221-1, 221-2), stoffschlüssig und/oder kraftschlüssig und/oder formschlüssig befestigt ist, wobei der zumindest eine Anbindungsadapter (100, 100-1, 100-2) insbesondere stoffschlüssig und/oder kraftschlüssig und/oder formschlüssig an einem Adapterarm (201) des Fahrwerkbauteils (218, 219, 219-1, 219-2, 221, 221-1, 221-2) befestigt ist, wobei der Adapterarm (201) insbesondere stoffschlüssig, insbesondere verschweißt, und/oder kraftschlüssig, insbesondere verschraubt, mit dem Längsträger (219, 219-1, 219-2) und/oder Querträger (221, 221-1, 221-2), verbunden ist.

11. Fahrwerkanordnung (200) nach einem der vorangehenden Ansprüche 8, 9 oder 10, **dadurch gekennzeichnet, dass** die Fahrwerkanordnung (200) zumindest einen endseitigen Anbindungsadapter (100, 100-1) aufweist, welcher an einem Ende (223) des Fahrwerkbauteils (218, 219, 219-1, 219-2, 221, 221-1, 221-2), insbesondere Längsträger (219, 219-1, 219-2) und/oder Querträger (221, 221-1, 221-2) des Fahrwerkbauteils (218, 219, 219-1, 219-2, 221, 221-1, 221-2), und/oder an einem dem Ende (223) abgewandten weiteren Ende (225) des Fahrwerkbauteils (218, 219, 219-1, 219-2, 221, 221-1, 221-2), insbesondere Längsträger (219, 219-1, 219-2) und/oder Querträger (221, 221-1, 221-2) des Fahrwerkbauteils (218, 219, 219-1, 219-2, 221, 221-1, 221-2), stoffschlüssig, insbesondere verschweißt, und/oder kraftschlüssig, insbesondere verschraubt, befestigt ist, insbesondere direkt befestigt ist.

12. Fahrwerkanordnung (200) nach einem der Ansprüche 8 bis 11, **dadurch gekennzeichnet, dass** die Fahrwerkanordnung (200) zumindest einen mittigen Anbindungsadapter (100, 100-2) aufweist, welcher an einem Mittenbereich (233) des Fahrwerkbauteils (218, 219, 219-1, 219-2, 221, 221-1, 221-2), insbesondere Längsträger (219, 219-1, 219-2) und/oder Querträger (221, 221-1, 221-2) des Fahrwerkbauteils (218, 219, 219-1, 219-2, 221, 221-1, 221-2), stoffschlüssig und/oder kraftschlüssig und/oder formschlüssig befestigt ist, wobei der Mittenbereich (233) zwischen einem Ende (223) des Fahrwerkbauteils (218, 219, 219-1, 219-2, 221, 221-1, 221-2), insbesondere Längsträger (219, 219-1, 219-2) und/oder Querträger (221, 221-1, 221-2) des Fahrwerkbauteils (218, 219, 219-1, 219-2, 221, 221-1, 221-2), und einem dem Ende (223) abgewandten weiteren Ende (225) des Fahrwerkbauteils (218, 219, 219-1, 219-2, 221, 221-1, 221-2), insbesondere Längsträger (219, 219-1, 219-2) und/oder Querträger (221, 221-1, 221-2) des Fahrwerkbauteils (218, 219, 219-1, 219-2, 221, 221-1, 221-2), angeordnet ist, wobei insbesondere der mittige Anbindungsadapter (100, 100-2) stoffschlüssig und/oder kraftschlüssig und/oder formschlüssig an einem sich von dem Mittenbereich (233) des Längsträgers (219, 219-1, 219-2) und/oder Querträgers (221, 221-1, 221-2) des Fahrwerkbauteils (218, 219, 219-1, 219-2, 221, 221-1, 221-2) erstreckenden Adapterarm (201) des Fahrwerkbauteils (218, 219, 219-1, 219-2, 221, 221-1, 221-2) befestigt ist, wobei der Adapterarm (201) stoffschlüssig, insbesondere verschweißt, und/oder kraftschlüssig, insbesondere verschraubt, an dem Mittenbereich (233) des Längsträgers (219, 219-1, 219-2) und/oder Querträgers (221, 221-1, 221-2), befestigt ist.

13. Fahrwerkanordnung (200) nach einem der Ansprüche 8 bis 12, **dadurch gekennzeichnet, dass** die Fahrwerkanordnung (200) einen ersten Längsträger (219, 219-1) und einen zweiten Längsträger (219, 219-2) aufweist, wobei die Fahrwerkanordnung (200) einen sich quer zu dem ersten und zweiten Längsträger (219, 219-1, 219-2) erstreckenden ersten und zweiten Querträger (221, 221-1, 221-2) aufweist, wobei der erste und zweite Querträger (221, 221-1, 221-2) jeweils stoffschlüssig und/oder kraftschlüssig an dem ersten Längsträger (219, 219-1) und an dem zweiten Längsträger (219, 219-2) befestigt sind.

14. Fahrwerkanordnung (200) nach einem der Ansprüche 8 bis 13, **dadurch gekennzeichnet, dass** die Fahrwerkanordnung (200) ein Fahrzeugbauteil (237), insbesondere einen Fahrzeugboden, und ein Befestigungsmittel (241) umfasst, wobei das Befestigungsmittel (241) durch die Befestigungsöffnung (109) in der Zylinderdeckfläche (103) des Anbindungsadapters (100, 100-1, 100-2) und eine weitere Befestigungsöffnung (247) des Fahrzeugbauteils (237) geführt und an dem Anbindungsadapter (100, 100-1, 100-2) festgelegt ist, um den Anbindungsadapter (100, 100-1, 100-2) an dem Fahrzeugbauteil (237) zu befestigen.

15. Verfahren (300) zum Herstellen eines Anbindungsadapters (100) zur Befestigung eines Fahrwerkbauteils (218, 219, 219-1, 219-2, 221, 221-1, 221-2), insbesondere Längsträger (219, 219-1, 219-2,) und/oder Querträger (221, 221-1, 221-2) des Fahrwerkbauteils (218, 219, 219-1, 219-2, 221, 221-1, 221-2) an einem Fahrzeugbauteil (237), wobei das Verfahren (300) die folgenden Verfahrensschritte umfasst:
Bereitstellen (301) eines aus Stahl bestehenden Halbzeugs;
Tiefziehen (303) des aus Stahl bestehenden Halbzeugs, um einen zylinderförmigen Bereich mit einer Zylinderdeckfläche (103) und einer Zylindermantelfläche (105) zu erhalten;
Einbringen (305) einer Befestigungsöffnung (109) in die Zylinderdeckfläche (103), um den als hohlzylinderförmige Hülse (101) geformten Anbindungsadapter (100, 100-1, 100-2) zu erhalten, welcher die Zylinderdeckfläche (103) und die Zylindermantelfläche (105) aufweist, wobei die Zylinderdeckfläche (103) und die Zylindermantelfläche (105) einen Hülseninnenraum (107) der hohlzylinderförmigen Hülse (101) begrenzen, wobei die hohlzylinderförmige Hülse (101) als ein aus Stahl bestehendes einteiliges und materialeinheitliches Tiefziehbauteil geformt ist;
und
optional ein Abtrennen (307) des sich von der Zylindermantelfläche (105) erstreckenden Überstands des als hohlzylinderförmige Hülse (101) geformten Anbindungsadapters (100, 100-1, 100-2).

## Geänderte Patentansprüche

### Geänderte Patentansprüche gemäss Regel 137(2) EPÜ.

1. Anbindungsadapter (100, 100-1, 100-2) zur Befestigung eines Fahrwerkbauteils (218, 219, 219-1, 219-2, 221, 221-1, 221-2) an einem Fahrzeugbauteil (237), wobei der Anbindungsadapter (100, 100-1, 100-2) als eine hohlzylinderförmige Hülse (101) geformt ist, welche eine Zylinderdeckfläche (103) und eine Zylindermantelfläche (105) aufweist, wobei die Zylinderdeckfläche (103) und die Zylindermantelfläche (105) einen Hülseninnenraum (107) der hohlzylinderförmigen Hülse (101) begrenzen, **dadurch gekennzeichnet, dass**
die Zylindermantelfläche (105) an dem Fahrwerkbauteil (218, 219, 219-1, 219-2, 221, 221-1, 221-2) stoffschlüssig und/oder kraftschlüssig und/oder formschlüssig befestigbar ist, dass
in der Zylinderdeckfläche (103) eine Befestigungsöffnung (109) geformt ist, durch welche ein Befestigungsmittel (241) führbar ist, um den Anbindungsadapter (100, 100-1, 100-2) an dem Fahrzeugbauteil (237) zu befestigen, und dass
die hohlzylinderförmige Hülse (101) als ein aus Stahl bestehendes einteiliges und materialeinheitliches Tiefziehbauteil geformt ist.

2. Anbindungsadapter (100, 100-1, 100-2) nach Anspruch 1, **dadurch gekennzeichnet, dass** die Zylinderdeckfläche (103) und/oder die Zylindermantelfläche (105) der hohlzylinderförmigen Hülse (101) eine Wandstärke (111) zwischen 1,5 mm und 5 mm aufweisen.

3. Anbindungsadapter (100, 100-1, 100-2) nach Anspruch 1 oder 2, **dadurch gekennzeichnet, dass** die hohlzylinderförmige Hülse (101) einen die Hülse (101) umlaufenden Übergangsbereich (113) aufweist, welcher zwischen der Zylinderdeckfläche (103) und der Zylindermantelfläche (105) der hohlzylinderförmigen Hülse (101) geformt ist.

4. Anbindungsadapter (100, 100-1, 100-2) nach Anspruch 3, **dadurch gekennzeichnet, dass** der umlaufende Übergangsbereich (113) eine Wandstärke (111) zwischen 1,0 mm und 5 mm aufweist.

5. Anbindungsadapter (100, 100-1, 100-2) nach einem der vorangehenden Ansprüche, **dadurch gekennzeichnet, dass** die hohlzylinderförmige Hülse (101) an einer der Zylinderdeckfläche (103) gegenüberliegenden Unterseite (115) der hohlzylinderförmigen Hülse (101) keine Zylinderbodenfläche aufweist.

6. Anbindungsadapter (100, 100-1, 100-2) nach einem der vorangehenden Ansprüche, **dadurch gekennzeichnet, dass** die hohlzylinderförmige Hülse (101) einen Außendurchmesser (117) zwischen 30 mm und 150 mm aufweist, und/oder dass die hohlzylinderförmige Hülse (101) eine Höhe (119) zwischen 30 mm und 200 mm aufweist, und/oder dass die Befestigungsöffnung (109) in der Zylinderdeckfläche (103) einen Öffnungsdurchmesser (121) zwischen 7 mm und 30 mm aufweist.

7. Anbindungsadapter (100, 100-1, 100-2) nach einem der vorangehenden Ansprüche, **dadurch gekennzeichnet, dass** die Zylindermantelfläche (105) mit dem Fahrwerkbauteil (218, 219, 219-1, 219-2, 221, 221-1, 221-2) verschweißbar und/oder verschraubbar ist.

8. Fahrwerkanordnung (200) in einem Fahrzeug, umfassend:
ein Fahrwerkbauteil (218, 219, 219-1, 219-2, 221, 221-1, 221-2), und
zumindest einen Anbindungsadapter (100, 100-1, 100-2) nach einem der Ansprüche 1 bis 7, wobei die Zylindermantelfläche (105) des zumindest einen Anbindungsadapters (100, 100-1, 100-2) an dem Fahrwerkbauteil (218, 219, 219-1, 219-2, 221, 221-1, 221-2) stoffschlüssig und/oder kraftschlüssig und/oder formschlüssig befestigt ist.

9. Fahrwerkanordnung (200) nach Anspruch 8, **dadurch gekennzeichnet, dass** das Fahrwerkbauteil (218, 219, 219-1, 219-2, 221, 221-1, 221-2) ein Vorderachsträger, ein Hinterachsträger, oder eine Verbundlenkerachse ist.

10. Fahrwerkanordnung (200) nach Anspruch 8 oder 9, **dadurch gekennzeichnet, dass** der zumindest eine Anbindungsadapter (100, 100-1, 100-2) an dem Fahrwerkbauteil (218, 219, 219-1, 219-2, 221, 221-1, 221-2) stoffschlüssig und/oder kraftschlüssig und/oder formschlüssig befestigt ist, wobei der zumindest eine Anbindungsadapter (100, 100-1, 100-2) an einem Adapterarm (201) des Fahrwerkbauteils (218, 219, 219-1, 219-2, 221, 221-1, 221-2) befestigt ist, wobei der Adapterarm (201) mit dem Längsträger (219, 219-1, 219-2) und/oder Querträger (221, 221-1, 221-2) verbunden ist.

11. Fahrwerkanordnung (200) nach einem der vorangehenden Ansprüche 8, 9 oder 10, **dadurch gekennzeichnet, dass** die Fahrwerkanordnung (200) zumindest einen endseitigen Anbindungsadapter (100, 100-1) aufweist, welcher an einem Ende (223) des Fahrwerkbauteils (218, 219, 219-1, 219-2, 221, 221-1, 221-2) und/oder an einem dem Ende (223) abgewandten weiteren Ende (225) des Fahrwerkbauteils (218, 219, 219-1, 219-2, 221, 221-1, 221-2) stoffschlüssig und/oder kraftschlüssig befestigt ist.

12. Fahrwerkanordnung (200) nach einem der Ansprüche 8 bis 11, **dadurch gekennzeichnet, dass** die Fahrwerkanordnung (200) zumindest einen mittigen Anbindungsadapter (100, 100-2) aufweist, welcher an einem Mittenbereich (233) des Fahrwerkbauteils (218, 219, 219-1, 219-2, 221, 221-1, 221-2) stoffschlüssig und/oder kraftschlüssig und/oder formschlüssig befestigt ist, wobei der Mittenbereich (233) zwischen einem Ende (223) des Fahrwerkbauteils (218, 219, 219-1, 219-2, 221, 221-1, 221-2) und einem dem Ende (223) abgewandten weiteren Ende (225) des Fahrwerkbauteils (218, 219, 219-1, 219-2, 221, 221-1, 221-2) angeordnet ist.

13. Fahrwerkanordnung (200) nach einem der Ansprüche 8 bis 12, **dadurch gekennzeichnet, dass** die Fahrwerkanordnung (200) einen ersten Längsträger (219, 219-1) und einen zweiten Längsträger (219, 219-2) aufweist, wobei die Fahrwerkanordnung (200) einen sich quer zu dem ersten und zweiten Längsträger (219, 219-1, 219-2) erstreckenden ersten und zweiten Querträger (221, 221-1, 221-2) aufweist, wobei der erste und zweite Querträger (221, 221-1, 221-2) jeweils stoffschlüssig und/oder kraftschlüssig an dem ersten Längsträger (219, 219-1) und an dem zweiten Längsträger (219, 219-2) befestigt sind.

14. Fahrwerkanordnung (200) nach einem der Ansprüche 8 bis 13, **dadurch gekennzeichnet, dass** die Fahrwerkanordnung (200) ein Fahrzeugbauteil (237) und ein Befestigungsmittel (241) umfasst, wobei das Befestigungsmittel (241) durch die Befestigungsöffnung (109) in der Zylinderdeckfläche (103) des Anbindungsadapters (100, 100-1, 100-2) und eine weitere Befestigungsöffnung (247) des Fahrzeugbauteils (237) geführt und an dem Anbindungsadapter (100, 100-1, 100-2) festgelegt ist, um den Anbindungsadapter (100, 100-1, 100-2) an dem Fahrzeugbauteil (237) zu befestigen.

15. Verfahren (300) zum Herstellen eines Anbindungsadapters (100) zur Befestigung eines Fahrwerkbauteils (218, 219, 219-1, 219-2, 221, 221-1, 221-2) an einem Fahrzeugbauteil (237), wobei das Verfahren (300) die folgenden Verfahrensschritte umfasst:
Bereitstellen (301) eines aus Stahl bestehenden Halbzeugs;
Tiefziehen (303) des aus Stahl bestehenden Halbzeugs, um einen zylinderförmigen Bereich mit einer Zylinderdeckfläche (103) und einer Zylindermantelfläche (105) zu erhalten;
Einbringen (305) einer Befestigungsöffnung (109) in die Zylinderdeckfläche (103), um den als hohlzylinderförmige Hülse (101) geformten Anbindungsadapter (100, 100-1, 100-2) zu erhalten, welcher die Zylinderdeckfläche (103) und die Zylindermantelfläche (105) aufweist, wobei die Zylinderdeckfläche (103) und die Zylindermantelfläche (105) einen Hülseninnenraum (107) der hohlzylinderförmigen Hülse (101) begrenzen, wobei die hohlzylinderförmige Hülse (101) als ein aus Stahl bestehendes einteiliges und materialeinheitliches Tiefziehbauteil geformt ist;
und
optional ein Abtrennen (307) des sich von der Zylindermantelfläche (105) erstreckenden Überstands des als hohlzylinderförmige Hülse (101) geformten Anbindungsadapters (100, 100-1, 100-2).
